# NEUE EUROPÄISCHE PATENTSCHRIFT

(11) **EP 0 954 536 B2**
(45) Veröffentlichungstag und Bekanntmachung des Hinweises auf die Entscheidung über den Einspruch: **07.01.2009**
(45) Hinweis auf die Patenterteilung: 24.10.2001
(21) Anmeldenummer: 98907931.4
(22) Anmeldetag: 08.01.1998
(51) Int. Cl.: C08B 11/20, C08J 3/12

(54) **VERFAHREN ZUR HERSTELLUNG VON FEINTEILIGEN POLYSACCHARIDDERIVATEN**
PROCESS FOR PREPARING FINE-PARTICLE POLYSACCHARIDE DERIVATIVES
PROCEDE DE PREPARATION DE DERIVES DE POLYSACCHARIDE A FINES PARTICULES

(30) Priorität: 21.01.1997 DE 19701876; 05.12.1997 DE 19754064
(43) Veröffentlichungstag der Anmeldung: 10.11.1999
(73) Patentinhaber: Dow Wolff Cellulosics GmbH, 29699 Bomlitz (DE)
(72) Erfinder: WEBER, Gunter, D-29683 Fallingbostel (DE); REDEKER, Detmar, D-29664 Walsrode (DE); KLINKSIEK, Bernd, D-51429 Bergisch Gladbach (DE); HINDERER, Jürgen, D-51381 Leverkusen (DE); ULFIK, Benno, D-51379 Leverkusen (DE)
(74) Vertreter: Hollah, Dorothee
(86) Internationale Anmeldenummer: PCT/EP1998/000080
(87) Internationale Veröffentlichungsnummer: WO 1998/031710

(56) Entgegenhaltungen:
- WO-A1-96/00748
- DE-A- 1 793 472
- DE-A1- 3 032 778
- DE-A1- 3 839 831
- DE-B- 2 458 998
- DE-C- 287 556
- GB-A- 2 262 527
- US-A- 4 076 935
- Messvorschrift der Tech.Universität Freiberg http://www.geomark.tu-freiberg.de/hase/korn groe.html
- Dow : Methocel 345
- O.KARDSACHIA ET AL. DAS PAPIER Nr. 53, Seite 96-108
- Ullmann's Encyclopedia of Industrial Chemistry 5th edition (1987),volume A5, 461-465
- GEORG THIEME VERLAG STUTTGART: 'Grundoperationen', Artikel JORGEN GMEHLING, Seiten 418 - 420

## Beschreibung

Die Erfindung betrifft ein neues, besonders wirtschaftliches Verfahren zur Herstellung von pulverförmigen Polysaccharidderivaten, insbesondere Cellulosederivaten mit thermischem Flockpunkt.

Nach der Reaktion und gegebenenfalls nach der Reinigung von bei der Reaktion entstandenen Nebenprodukten liegen Polysaccharidderivate in bröckeliger, stückiger oder wattiger Form vor. In dieser Form beinhalten die Polysaccharidderivate noch die durch die Rohmaterialien vorgegebenen Strukturen. So zeigen beispielsweise Celluloseether noch die faserartige Struktur des Ausgangszellstoffs. Diese Polysaccharidderivate sind so für ihren Einsatz, z.B. als in organischen und/oder wässrigen Medien lösliche Produkte, nicht geeignet.

Auch ist es notwendig, für die unterschiedlichen Einsatzgebiete bestimmte Korngrößenverteilungen, Schüttdichten, Trocknungsgrade und Viskositätsgrade einzustellen.

Grundsätzlich müssen also nahezu alle Polysaccharidderivate verdichtet, gemahlen und getrocknet werden, um sie einsatzfähig zu machen.

Zu den technisch bedeutenden Polysaccharidderivaten gehören die Cellulosederivate. Ihre Herstellung, Eigenschaften und Anwendungen werden z.B. beschrieben in: Ullmann's Encyclopedia of Industrial Chemistry, 5th Edition (1986), Volume A5, Page 461- 488, VCH Verlagsgesellschaft, Weinheim. Methoden der organischen Chemie, 4. Auflage (1987), Band E20, Makromolekulare Stoffe, Teilband 3, Seite 2048-2076, Georg Thieme Verlag Stuttgart.

Aus der DE-C 952 264 ist ein dreistufiges Verfahren zur Überführung feuchter, faseriger Methylcellulosen in Pulver von hoher Lösegeschwindigkeit bekannt. Hier wird das 50 bis 70 Gew.-% Wasser enthaltende Produkt zuerst zu einer plastischen Masse homogenisiert und auf 10 bis 20°C gekühlt wobei man sich einer gekühlten Schneckenpresse bedient; anschließend wird mit einer Hammermühle gemahlen und in einem Umlufttrockner getrocknet.

In der EP-A 0 049 815 (= US-A 4 415 124) wird ein zweistufiges Verfahren zur Herstellung von Mikropulvern aus Celluloseethern oder Cellulose beschrieben, wobei man die Produkte, die eine feinfaserige oder wollige Struktur aufweisen, zuerst in eine versprödete, verfestigte Form überführt und das so behandelte Material einer Mahlung unterwirft bis eine Korngrößenverteilung von mindestens 90 % unter 0,125 mm erreicht. In der Versprödungsstufe werden Schwing- oder Kugelmühlen, vorzugsweise in gekühlter Ausführung oder Pelletpressen und in der Mahlstufe Strahl, Stift- oder Pralltellermühlen eingesetzt.

DE-A 30 32 778 nennt ein zweistufiges Verfahren zur kontinuierlichen Homogenisierung von feuchten Celluloseethern, indem man den feuchten Celluloseether einer Schneid-, Prall- und Scherwirkung, erzeugt durch umlaufende Drehkörper mit verschiedenen Mantelprofilen, unterwirft, gegebenenfalls gleichzeitiger Pelletisierung der zerkleinerten Celluloseether unser Zugabe von Wasser und anschließender Trocknung der erhaltenen Pellets.

EP-B 0 370 447 beschreibt ein Verfahren zur produktschonenden Mahlung und gleichzeitigen Trocknung von feuchten Celluloseethern, wobei ein Celluloseether mit einer Anfangsfeuchte von 20 bis 70 Gew.-% mittels eines Transportgases befördert und gleichzeitig zu einer Schlagzerkleinerung reibzerkleinert und durch die Mahlenergie auf eine Restfeuchte von 1 bis 10 Gew.-% getrocknet wird.

In der EP-B 0 384 046 wird ein Verfahren zur Herstellung von Celluloseetherteilchen beschrieben, umfassend das Zerkleinern in einer Hochdrehzahl-Luftstrom-Rotationsprallmühle auf eine Teilchengröße von 0,4 bis 0,035 mm von Celluloseethern mit einer Viskosität größer 100 Pa*s, bestimmt als 2%-ige wässrige Lösung bei 20°C unter Verwendung eines Ubbelodhe Rohres.

JP-A 79 74855 beschreibt ein Verfahren zur Herstellung von pulverförmigen, löslichen Cellulosederivaten durch Sprühtrocknung einer Lösung von löslichen Cellulosederivaten.

Die WO 96/0074 (= EP 0 767 811) nennt ein Verfahren zur Zerkleinerung von Celluloseethern, umfassend die Extrusion eines hydratisierten Celluloseethers durch Öffnungen mit einer Querschnittsfläche von 0,0075 mm² bis 1 mm² (7,5 x 10⁻⁹ m² bis 1 x 10⁻⁶ m²) und Zerschneiden des so erzeugten Extrudats auf die erwünschte Länge.

Die EP-B 0 201 895 beschreibt ein Verfahren zur Herstellung von weitgehend nicht-faserigem CMC-Material, gekennzeichnet durch das Behandeln der faserigen CMC mit Wasser und das Gewinnen der nichtfaserigen CMC durch Zusetzen eines Nichtlösungsmittels für die CMC.

Die CH-A-287 556 offenbart ein Verfahren zur Herstellung von in kaltem Wasser löslicher und in heißem Wasser unlöslicher Alkylcellulose in feinpulverisierbarer Form, ausgehend von gefällte Alkylcellulosen enthaltenden Reaktionsmischungen, die durch Versetzen einer Lösung von kaltwasserlöslichen Alkylcellulosen mit fällend wirkenden Salzen erhalten worden sind, wobei die gefällten Alkylcellulosen vor den Salzlösungen abgetrennt und hierauf getrocknet werden.

Die bekannten Verfahren nach dem Stand der Technik sind zum großen Teil mehrstufig mit Vortrockner oder Vorversprödung bzw. -verdichtung. Weiterhin ist bei allen Verfahren die chemische und/oder thermische Belastung der Makromoleküle, besonders bei der Verarbeitung von hochviskosen, hochsubstituierten Produkten, immer noch so hoch, dass bei der Mahlung die Makromoleküle im Sinne einer Kettenverkleinerung abgebaut werden, was sich insbesondere durch den mehr oder minder hohen Viskositätsabbau gegenüber den eingesetzten Produkten bemerkbar macht.

Außerdem verhornen die Oberflächen der durch Vorversprödung- bzw Vortrocknungsschritte behandelten Produkte. Des weiteren ist allen Verfahren der hohe Energieaufwand zur Vermahlung der Polysaccharidderivate nach Vortrocknung, -versprödung oder -verdichtung gemeinsam.

Aufgabe der vorliegenden Erfindung ist es deshalb, ein Verfahren zu entwickeln, bei dem
- gezielt Mahlungsgrade eingestellt werden können,
- keine Verhornung der Produkte auftritt,
- die Schüttdichte der Produkte erhöht wird,
- kein oder nur ein minimaler unerwünschter Viskositätsabbau gegenüber den Ausgangsprodukten erfolgt,
- ein gut rieselfähiges Produkt erhalten wird,
- der Feinstaubanteil im Produkt gering ist,
- der Energieaufwand, der für die Verdichtung, Trocknung und Mahlung aufgewendet werden muss, reduziert ist und
- die notwendigerweise eingetragene Energie teilweise zurückgewonnen bzw. anschließend genutzt werden kann.

Diese Aufgabe konnte dadurch gelöst werden, dass
a) ein Polysaccharidderivat in einer ausreichenden Menge Wasser, bevorzugt 35 bis 99 Gew.-%, besonders bevorzugt 60 bis 80 Gew.-% bezogen auf das Gesamtgewicht, gequollen oder gelöst wird, so dass übergeordnete Strukturen, wie sie aus dem Polysaccharidausgangsmaterial resultieren weitgehend aufgehoben werden, und anschließend
b) in einer Mahltrocknungsvorrichtung derart mittels Heißdampfmahltrocknung mit einem Wärmeträgergas bestehend aus überhitztem Wasserdampf in den Fesfkörperzustand überführt wird, dass synergistisch einerseits durch überhitzten Wasserdampf das Wasser, das sich im gequollenen oder gelösten Polysaccharidderivat befindet, in die Dampfphase überführt wird und andererseits das gelöste oder gequollene Polysaccharidderivat durch Phasenübergang in den Festkörper überführt wird, wobei bei diesen Prozessen die Formveränderung des Polysaccharidderivates unter Überlagerung von äußeren Kräften geschieht (Heißdampfmahltrocknung, HDMT) und dann
c) gegebenenfalls in einem anschließenden Trocknungsschritt in Aggregaten gemäß dem Stand der Technik auf die gewünschte Feuchte getrocknet wird.

Überraschenderweise konnte gefunden werden, dass die mit diesem Verfahren hergestellten Polysaccharidderivate eine hohe Schüttdichte bei guter Rieselfähigkeit besitzen. Die so erzeugten Partikeln besitzen einen Formfaktor* von kleiner 5 und größer/gleich 1, wobei der überwiegende Anteil (> 50 Gew.-%) einen Formfaktor* von kleiner/gleich 2 aufweist und der Feinstaubanteil im Produkt gering ist. Es findet kein oder nur ein minimaler unerwünschter Viskositätsabbau gegenüber den Ausgangsprodukten statt. Des weiteren konnte gefunden werden, dass der Gesamtenergiebedarf der Heißdampfinahltrocknung gegenüber den Verfahren nach dem Stand der Technik verringert ist und, da das Wärmeträgergas aus überhitztem Wasserdampf besteht, die zur Mahlung eingetragene Energie sich umgewandelt in Wärmenergie im Wärmeträgergas wiederfindet und somit genutzt oder vorteilhaft in andere Energieformen umgewandelt werden kann.
* *Unter Formfaktor wird in diesem Zusammenhang das Verhältnis des größten Durchmessers zum kleinsten Durchmesser eines (im Idealfall ellipsoiden) Körpers verstanden*

Die Erfindung betrifft ein neues, besonders wirtschaftliches Verfahren zur Herstellung von pulverförmigen Polysaccharidderivaten, insbesondere Cellulosederivaten mit thermischem Flockpunkt, wobei das Verfahren die Quellung oder Lösung des Polysaccharidderivates in Wasser, die Zerteilung/Zerkleinerung des gequollenen oder gelösten Polysaccharidderivates unter thermischer und/oder mechanischer Flüssigkeitsabtrennung und gegebenenfalls einen Trocknungsschritt umfasst.

Die Polysaccharidderivate, die in diesem Verfahren zur Anwendung kommen sind löslich oder zumindest quellbar in Lösungsmitteln oder Lösungsmittelgemischen. Sie können einen oder mehrere Substituenten der Art:

Hydroxethyl, Hydroxypropyl, Hydroxybutyl, Methyl, Ethyl, Propyl, Dihydroxypropyl, Carboxymethyl, Sulfoethyl, hydrophobe langkettige verzweigte und nicht verzweigte Alkylreste, hydrophobe langkettige verzweigte und nicht verzweigte Alkylarylreste oder Arylalkylreste, kationische Reste, Acetat, Propionat, Butyrat, Lactat, Nitrat, Sulfat tragen,
wobei einige Reste, wie z.B. Hydroxyethyl, Hydroxypropyl, Hydroxybutyl, Dihydroxypropyl, Lactat in der Lage sind Pfröpfe zu bilden und die Substituenten der erfmdungsgemäßen Polysaccharidderivate nicht auf diese Reste beschränkt sind. Typische Polysaccharidderivate sind Guarderivate, Stärkederivate, Chitin bzw. Chitosanderivate bevorzugt Cellulosederivate, wobei die erfindungsgemäßen Polysacchariderivate nicht auf diese beschränkt sind.

Beispiele für Cellulosederivate sind Hydroxyethylcellulose (HEC), Hydroxypropylcellulose (HPC), Ethylhydroxyethylcellulose (EHEC), Carboxymethylhydroxyethylcellulose (CMHEC), Hydroxypropylhydroxyethylcellulose (HPHEC), Methylcellulose (MC), Methylhydroxypropylcellulose (MHPC), Methylhydroxyethylcellulose (MHEC), Carboxymethylcellulose (CMC), hydrophob modifizierte Hydroxyethylcellulose (hmHEC), hydrophob modifizierte Hydroxypropylcellulose (hmHPC), hydrophob modifizierte Ethylhydroxyethylcellulose (hmEHEC), hydrophob modifizierte Carboxymethylhydroxyethylcellulose (hmCMHEC), hydrophob modifizierte Hydroxypropylhydroxyethylcellulose (hmHPHEC), hydrophob modifizierte Methylcellulose (hmMC), hydrophob modifizierte Methylhydroxypropylcellulose (hmMHPC), hydrophob modifizierte Methylhydroxyethylcellulose (hmMHEC), hydrophob modifizierte Carboxymethylmethylcellulose (hmCMMC), Sulfoethylcellulose (SEC), Hydroxyethylsulfoethylcellulose (HESEC), Hydroxypropylsulfoethylcellulose (HPSEC), Methylhydroxyethylsulfoethylcellulose (MHESEC), Methylhydroxypropylsulfoethylcellulose (MHPSEC), Hydroxyethylhydroxypropylsulfoethylcellulose (HEHPSEC), Carboxymethylsulfoethylcellulose (CMSEC), hydrophob modifizierte Sulfoethylcellulose (hmSEC), hydrophob modifizierte Hydroxyethylsulfoethylcellulose (hmHESEC), hydrophob modifizierte Hydroxypropylsulfoethylcellulose (hmHPSEC), hydrophob modifizierte Hydroxyethylhydroxypropylsulfoethylcellulose (hmHEHPSEC).

Besonders bevorzugte Cellulosederivate sind Celluloseether mit einem thermischen Flockpunkt in Wasser wie z.B. Methylcellulose, Methylhydroxyethylcellulose, Methylhydroxypropylcellulose und Hydroxypropylcellulose.

Das Lösungsmittel ist Wasser.

Durch den Quell- oder Lösevorgang werden übergeordnete Strukturen, wie sie aus dem Polysaccharidausgangsmaterial resultieren, aufgehoben. So geht bei Celluloseethern beipielsweise die faserartige Struktur nahezu vollständig verloren, wobei selbstverständlich nur der Anteil des Polysaccharidderivates gequollen oder gelöst wird, dessen Derivatisierung ausreichend ist. Die so erhaltenen gequollenen oder gelösten Polysaccharidderivate enthalten zu weniger als 25 bis 50 Gew.-% bezogen auf den Feststoffanteil lösliches oder quellbares Material im Ausgangszustand, bei Cellulosederivaten im Faserzustand, bevorzugt zu weniger als 10 Gew.-%, besonders bevorzugt zu weniger als 5 Gew.-%, am meisten bevorzugt zu weniger als 1 Gew.-%.

Der Anteil an Wasser wird so gewählt, dass eine ausreichende Quellung bzw. Lösung erreicht wird, um die übergeordneten Strukturen aufzuheben. In einer bevorzugten Vorgehensweise sind dies 35 bis 99 Gew.-%, besonders bevorzugt 60 bis 80 Gew.-% Wasser bezogen auf das Gesamtgewicht.

In einer Ausführung des Verfahrens werden Polysaccharidderivate mit thermischem Flockpunkt, bevorzugt Celluloseether mit thermischem Flockpunkt in Wasser, besonders bevorzugt Methylcellulose, Methylhydroxyethylcellulose, Methylhydroxypropylcellulose, Hydroxypropylcellulose, durch Abkühlung eines lösungsmittelfeuchten, bevorzugt wasserfeuchten Filterkuchens, gegebenenfalls unter Zuhilfenahme zusätzlichen Wasser, bis auf Temperaturen unterhalb des Flockpunktes gequollen oder in Lösung gebracht, so dass übergeordnete Strukturen, z.B. Faserstrukturen, weitgehend verlorengehen.

Das gequollene oder gelöste Polysaccharidderivat wird dann in einer Mahltrocknungsvorrichtung derart in den Festkörperzustand überführt, dass synergistisch einerseits durch überhitzten Wasserdampf das Wasser, das sich im gequollenen oder gelösten Polysaccharidderivat befindet, in die Dampfphase überführt wird und andererseits das gelöste oder gequollene Polysaccharidderivat durch Phasenübergang in den Festkörper überführt wird, wobei bei diesen Prozessen die Formveränderung des Polysaccharidderivates unter Überlagerung von äußeren Kräften geschieht (Heißdampfmahltrocknung, HDMT).

Die Zuführung des Polysaccharidderivates in die Mahltrocknungsvorrichtung kann in Abhängigkeit der Konsistenz des zuzuführenden Materials mittels Zuführorganen gemäß dem Stand der Technik geschehen. Eine Vorzerkleinerung des zuzuführenden Stranges in Einzelstränge, welche gegebenenfalls zusätzlich in Querrichtung zerteilt werden, ist erfindungsgemäß, wobei die Einzelstränge Querschnittsflächen von größer 1 mm² aufweisen. Mit Schneckendosierern ist die Einspeisung der extrudierten Stränge direkt auf die Mahlzone möglich. Vorteilhafterweise wird das Aufgabegut durch ein Passiersieb gedrückt und dabei zu Einzelsträngen geformt. Diese können pneumatisch in die Mahltrocknungsvorrichtung gefördert werden. In ähnlicher Weise können ein- oder zweiwellige Schneckenmaschinen mit Lochscheibenvorsatz (Fleischwolf) verwendet werden. Mit Hilfe eines Schneidwerkes können die Endlosstränge gegebenenfalls nach der Lochscheibe in kleinere Abschnitte geschnitten werden.

Nach einer Variante des Verfahrens wird die Heißdampfmahltrocknung in einer Gas bzw. Luftstrommühle durchgeführt, in der das Polysaccharidderivat einer Prall- und/oder Scherbeanspruchung unterworfen wird. In Frage kommende Mühlen sind z.B. Hammermühlen, Siebmühlen, Stiftmühlen, Scheibenmühlen, Strahlmühlen, bevorzugt Sichtermühlen. Als Wärmeträger- und Transportgas zur Heißdampfmahltrocknung wird überhitzter Wasserdampf (Heißdampf) eingesetzt. Das gelöste oder gequollene Polysaccharidderivat wird durch vielfache Prall- und/oder Scherbeanspruchung zwischen rotierenden und feststehenden oder gegenläufig rotierenden Mahlwerkzeugen und/oder durch Stoß mehrerer Partikel zerkleinert. Gleichzeitig wird das im Feststoff befindliche Wasser verdampft. Die dazu erforderliche thermische Energie wird nur zum Teil durch überhitzten Wasserdampf eingebracht. Die durch Reibung in Wärme umgesetzte elektrische Energie des Mühlenantriebes trägt gleichzeitig zur Trocknung bei. Die feinteiligen Feststoffpartikel werden in einem der Mahltrocknungsvorrichtung nachgeschaltetem Abscheider vom Gasstrom getrennt. Dieses kann ein Massenkraftabscheider wie z.B. ein Zyklon oder auch ein Filterabscheider sein. Je nach Mühlenbauart kann bereits intern eine Klassierung durch Sichtung erfolgen. Ein gegebenenfalls vorhandener Grießeanteil wird aufgrund der die Schleppkräfte des Transportgases überwiegenden Fliehkraft vom Feingut getrennt. Das Feingut wird als Fertiggut aus der Mahlkammer mit dem Transportgas ausgetragen. Die Grieße werden in einem internen oder externen Grießerücklauf wieder zur Mahlzone zurückgeführt. Alternativ oder ergänzend kann es sinnvoll sein, eine weitere Klassierstufe durch Sichtung oder bevorzugt Siebung nachzuschalten. Der dort abgetrennte Grobanteil kann gegebenenfalls zur Mühle zurückgeführt werden oder dem Aufgabegut untergemischt werden.

In einer bevorzugten Ausführung des Verfahrens wird der Heißdampf im Kreis geführt und der überschüssige Heißdampf als Dampfteilstrom ausgeschleust. Vor die Mahltrocknungsvorrichtung wird ein Wärmetauscher geschaltet, der den durch die Verdampfung des Wassers, das das Polysaccharidderivat enthält, und Wärmeverlust abgekühlten Dampf wieder aufheizt. Die Temperatur des für die Heißdampfmahltrocknung notwendigen Wasserdampfes wird so gewählt, dass in Abhängigkeit des gewählten Produktdurchsatzes und/oder der Menge an Wasser im Polysaccharidderivat an keiner Stelle der Taupunkt unterschritten wird.

Durch Verwendung von Wasser in der Heißdampfmahltrocknung wird eine sauerstoffarme Atmosphäre innerhalb der Mahltrocknungsvorrichtung erreicht.

Der Dampfstrom bzw. ausgeschleuste Dampfteilstrom kann, gegebenenfalls nach einer Heißgasfiltration, unter Wärmerückgewinnung kondensiert werden.

Die feinteiligen Feststoffpartikel können gegebenenfalls in Trocknungsvorrichtungen gemäß dem Stand der Technik auf die gewünschte Feuchte getrocknet und gegebenenfalls vorher oder nachher einer Klassierung durch Siebung und/oder Sichtung unterworfen werden. Die Trocknung erfolgt zweckmäßigerweise mit konvektiven Trocknern, vorzugsweise mit Stromtrocknern, Ringtrocknern oder ähnlichen Aggregaten.

Für eine Modifizierung des Eigenschaftsprofils des Endproduktes können gegebenenfalls vor, während oder nach einem oder mehreren der Schritte des Verfahrens-Quellung oder Lösung des Polysaccharidderivates in Wasser, Zerteilung/Zerkleinerung des gequollenen oder gelösten Polysaccharidderivates unter thermischer und/oder mechanischer Flüssigkeitsabtrennung, Trocknung des feinteiligen Polysaccharidderivates - Modifikatoren, Additive und/oder Wirkstoffe zugegeben werden.

Unter Modifikatoren sollen Substanzen verstanden werden, die chemisch Einfluss auf das Polysaccharidderivat nehmen. Typische Modifikatoren sind Oxidationsmittel, z.B. Wasserstoffperoxid, Ozon, Hypohalogenide, Perborate und Percarbonate sowie Vernetzungsmittel, z.B. Dialdehyde wie Glyoxal oder Glutarsäuredialdehyd, polyfunktionelle Epoxide, polyfunktionelle Isocyanate, organische Säuren, Mineralsäuren, organische und anorganische Salze, jedoch nicht auf diese beschränkt.

Unter Additiven sollen Substanzen verstanden werden, die keinen chemischen Einfluss auf das Polysaccharidderivat nehmen. Typische Additive sind Konservierungsstoffe, Dispergiermittel, Entschäumer, Luftporenbildner, Pigmente, nichtionische, anionische und kationische synthetische und natürliche Polymere, organische und anorganische Salze, jedoch nicht auf diese beschränkt.

Unter Wirkstoffen sollen Substanzen verstanden werden, die keinen chemischen Einfluss auf das Polysaccharidderivat nehmen und das Polysaccharidderivat als Bindemittel nutzen. Typische Wirkstoffe sind Pflanzenschutzmittel und Pharmawirkstoffe, jedoch nicht auf diese beschränkt.

Die Polysaccharidderivate dieser Erfindung können in einer Vielzahl von Anwendungen eingesetzt werden. Sie werden angewandt als wasser- oder lösungsmittellösliche Verdicker in Klebern, Farben, Baustoffen, Kosmetika, Lebensmitteln. Sie können eingesetzt werden als Beschichtungs- oder als Bindemittel, z.B. in Pharmazeutika. Eine weitere Anwendung ist als Schutzkolloid z.B. in der Suspensionspolymerisation.

Bei den Produkten dieses Verfahren handelt es sich um feinteilige Polysaccharidderivate, wobei die aus den Ausgangsmaterialien stammenden Überstrukturen, z.B. Faserstrukturen weitgehend aufgehoben sind. Die einzelnen Feststoffpartikel besitzen einen Formfaktor* von kleiner 5 und größer/gleich 1, wobei der überwiegende Anteil (> 50 Gew.-%) einen Formfaktor* von kleiner/gleich 2 aufweist. Es können 100 Gew.-% der feinteiligen Feststoffpartikel ein 1 mm Sieb passieren, bevorzugt 100 Gew.-% ein 0,315 mm Sieb passieren, besonders bevorzugt mehr als 95 Gew.-% ein 0,16 mm Sieb passieren, am meisten bevorzugt mehr als 95 Gew.-% ein 0,1 mm Sieb passieren und weniger als 10 Gew.-% des Produktes können ein 0,01 mm Sieb passieren und mehr als 10 Gew.-% des Produktes werden auf einem 0,03 mm Sieb zurückgehalten. Der Anteil agglomerierter Partikel ist gering gegenüber Produkten gemäß dem Stand der Technik. Das Produkt besitzt gute Rieselfähigkeit und hohe Schüttdichten, im Falle von Celluloseethern Schüttdichten von größer/gleich 0,3 kg/l, bevorzugt größer/gleich 0,4 kg/l. Das Dispergier- und Quellverhalten der Produkte in Lösungsmitteln oder Lösungsmittelgemischen ist abhängig von den Verfahrensparametem des erfindungsgemäßen Verfahrens; es kann von erhöht gegenüber Produkten gemäß dem Stand der Technik bis erniedrigt gegenüber Produkten gemäß dem Stand der Technik eingestellt werden.

### Beispiele zur Quellung bzw. Lösung von MC

Methylhydroxyethylcellulose-Filterkuchen (aus Methylhydroxyethylcellulose mit einem Gehalt an Methoxygruppen von 19.9 bis 30.5 Prozent und einem Gehalt an Hydroxyethoxygruppen von 3,1 bis 14.8 Prozent), Feststoffanteil 50 Gew.-% bezogen auf Gesamtgewicht, wurde bei 95°C in einem Rührkessel mit Wasser, dessen Temperatur ebenfalls bei 95°C lag, auf 20 bis 30 Gew.-% Feststoffanteil bezogen auf das Gesamtgewicht unter stetigem Rühren eingestellt. Die so erhaltene Suspension wurde auf 45°C abgekühlt. Hierdurch wurde ein wässriges Methylhydroxyethylcellulosegel (im folgenden gelförmig oder auch Paste genannt) erzeugt.

Alternativ wurde die Separation der Methylhydroxyethylcellulose von der Waschlauge nach der Heißwasserwäsche so durchgeführt, dass direkt Filterkuchen mit einem Feststoffanteil von 30 bis 50 Gew.-% bezogen auf das Gesamtgewicht erhalten wurden. Durch Abkühlen auf 25°C wurde die Quellung bzw. Lösung der Methylhydroxyethylcellulose erreicht.

Die so hergestellten Methylhydroxyethylcellulosegele wurden in feinteilige Feststoffe überführt (Beispiele 1 bis 3).

### Beispiel 1 (nicht erfindungsgemäß)

Methylhydroxyethylcellulosepaste (aus Methylhydroxyethylcellulose mit einem Gehalt an Methoxygruppen von 19.9 bis 27.1 Prozent und einem Gehalt an Hydroxyethoxygruppen von 3,1 bis 9,9 Prozent und einer Viskosität in 2%iger wässriger Lösung von 15.000 mPa*s bei 20°C und 2,55 1/s (Haake Rotovisko)) wird in einen wassergefüllten doppelmantelbeheizten Rührkessel (501) bei Temperaturen oberhalb des Flockpunktes eingebracht. Die gelförmige Methylhydroxyethylcellulose wird mittels eines Rotor-Stator-Systems (Cavimix 1032 der Fa. Cavitron) dispergiert bzw. zerkleinert. Mit einer beheizten Zahnradpumpe wird die so erzeugte Suspension in einer beheizten Ringleitung geführt (ca. 100 l/h). Eine weitere beheizte Zahnradpumpe ermöglicht die definierte Entnahme eines Teilstromes (1-5 l/h) aus dieser Ringleitung. Dieser Teilstrom wird mittels einer Zweistoffdüse in einem Sprühturm (Durchmesser 1 m) zerstäubt. Die Trocknerluft am Eintritt ist auf 200°C vorgeheizt, am Austritt beträgt die Temperatur ca. 120°C. Der Feststoff wird mittels einer Kombination von Zyklon und Filter abgeschieden. Man erhält ein trockenes, frei fließendes Pulver, welches zu mehr als 98 Gew.-% bezogen auf das Gesamtgewicht ein 0,1 mm Sieb passiert und zu mehr als 91 Gew.-% ein 0,063 mm Sieb passiert.

### Beispiel 2 (nicht erfindungsgemäß)

In einem doppelmantelbeheizten Rührkessel wird eine 2%ige Methylhydroxyethylcelluloselösung (aus Methylhydroxyethylcellulose mit einem Gehalt an Methoxygruppen von 24,2 bis 30,5 Prozent und einem Gehalt an Hydroxyethoxygruppen von 7,5 bis 14,8 Prozent und einer Viskosität in 2%iger wässriger Lösung von 20.000 mPa*s bei 20°C und 2,55 1/s (Haake Rotovisko)) bei ca. 60°C hergestellt. Die Methylhydroxyethylcelluloselösung wird über eine Düse (Durchmesser 0,7 mm) in eine 16%ige NaCl-Lösung bei Temperaturen oberhalb des Flockpunktes (95°C) abgetropft. Man erzielt Teilchengrößen von ca. 2 mm. Infolge des osmotischen Effektes enthalten die Teilchen nun ca. 20% Methylcellulose. Die Suspension wird bei Temperaturen oberhalb des Flockpunktes in einer Drucknutsche abfiltriert. Der Filterkuchen wird mit Waschwasser von 95°C gewaschen, danach mittels eines langsam laufenden Rührers angemaischt, erneut abfiltriert und gewaschen und nach 4 weiteren Wasch-Filtrierzyklen schließlich durch Absaugen vorentfeuchtet. Nach erneuter Verdünnung mit Wasser oberhalb des Flockpunktes auf ca. 10% Methylhydroxyethylcelluloseanteil wird in einem beheizten Vorlagebehälter durch ein Rotor-Stator-System, z.B. Kotthoff-Mischsirene, zerkleinert. Die Lösung wird mittels einer Zweistoffdüse in einem Sprühturm (Durchmesser 1 m) zerstäubt. Die Trocknerluft am Eintritt ist auf 200°C vorgeheizt, am Austritt beträgt die Temperatur ca. 120°C. Der Feststoff wird mittels einer Kombination von Zyklon und Filter abgeschieden. Man erhält trockenes, frei fließendes Pulver mit Salzgehalten von unter 1 % und Schüttdichten von ca. 340 g/l, welches zu mehr als 76 Gew.-% bezogen auf das Gesamtgewicht ein 0,1 mm Sieb passiert und zu mehr als 60 Gew.-% ein 0,063 mm Sieb passiert.

### Beispiel 3

Die Mahlanlage besteht aus einer Luftstrommühle mit vertikal angeordneter Antriebswelle und vier Mahlbahnen von 0,51 m Durchmesser mit jeweils 16 Schlagplatten, die gegen eine profilierte Gegenmahlbahn arbeiten. Die Rotorumfangsgeschwindigkeit beträgt 78 m/s. Der Mühle nachgeschaltet ist ein Zyklon mit 0,8 m Durchmesser, wo der Hauptanteil des feingemahlenen Produktes abgeschieden wird. Nach dem Zyklon drückt ein Gebläse das Mahlgas über einen Wärmetauscher wieder in die Mühle. Der überschüssige Dampfanteil wird ausgeschleust und in einem Venturi-Wäscher niedergeschlagen.

Eine wässrige Methylhydroxyethylcellulosepaste (aus Methylhydroxyethylcellulose mit einem Gehalt an Methoxygruppen von 24,2 bis 27,1 Prozent und einem Gehalt an Hydroxyethoxygruppen von 7,5 bis 11,8 Prozent und einer Viskosität in 2%iger wässriger Lösung von 12.000 mPa*s bei 20°C und 2,55 1/s (Haake Rotovisko)) mit einem Feststoffgehalt von 20 % bezogen auf das Gesamtgewicht wurde nach der oben beschriebenen Fahrweise mit einem Durchsatz von 50 kg pro Stunde der Mahlkammer zugeführt. Der eintretende Heißdampf hatte eine Temperatur von 180 bis 200°C bei Normaldruck. Nach der Mahlkammer betrug die Temperatur des Dampfes 120 bis 140°C. Die umgewälzte Gasmenge betrug 2500 Betriebskubikmeter bei Messung in Luft bei Raumtemperatur.

Es wurde eine gut rieselfähige Methylhydroxyethylcellulose erhalten, welche zu mehr als 85 Gew.-% bezogen auf das Gesamtgewicht ein 0,1 mm Sieb passiert und zu mehr als 57 Gew.-% ein 0,063 mm Sieb passiert.

Die Korngrößenanalysen wurden mit einem Laborluftstrahlsieb mit 3 g Einwaage und einer Laufdauer von 3 Minuten durchgeführt. Die Restfeuchte betrug 4 Gew.-% bezogen auf das Gesamtgewicht.

Durch eine anschließende Siebung auf einem Luftstrahlsieb mit einer Siebfläche von 0,28 m² und einem Durchsatz von 10 kg/h wurde das Maximalkorn reduziert, so dass 100 Gew.-% des feinteiligen Feststoffes bezogen auf das Gesamtgewicht ein 0,08 mm Sieb passieren.
Zu verschiedenen Zeitpunkten des Verfahrens (vor dem Lösungs- bzw. Quellungsschritt, als Gel, als Pulverware, als verschiedene Siebfraktionen der Pulverware) wurde die Viskosität der Methylhydroxyethylcellulose in wässriger Lösung gemessen und als durch das Verfahren unbeeinflusst gefunden.

Eine Paste einer anderen Methylhydroxyethylcellulose (aus Methylhydroxyethylcellulose mit einem Gehalt an Methoxygruppen von 21,4 bis 26,1 Prozent und einem Gehalt an Hydroxyethoxygruppen von 5,9 bis 9,8 Prozent und einer Viskosität in 2%iger wässriger Lösung von 28.000 mPa*s bei 20°C und 2,55 1/s (Haake Rotovisko)) ergab bei einem Durchsatz des Aufgabegutes von 50 kg/h, einer Dampfeintrittstemperatur von 200°C und einer Austrittstemperatur von 150°C ein Produkt welches zu 84 Gew.-% bezogen auf das Gesamtgewicht ein 0,1 mm Sieb passiert und zu 47 Gew.-% ein 0,063 mm Sieb passiert. Die Schüttdichte des Produktes betrug 0,47 kg pro Liter.

Die gleiche Methylhydroxyethylcellulosepaste wurde zum Vergleich in Stickstoffatmosphäre mahlgetrocknet: Es wurden etwa 100 Betriebskubikmeter Stickstoff der Mahlanlage im Umlauf zugeführt. Die Temperatur des austretenden Gases verringerte sich bei sonst gleichen Bedingungen auf 130°C. Es wurde ein Produkt erhalten, welches nur zu 56 Gew.-% bezogen auf das Gesamtgewicht ein 0,1 mm Sieb passiert und nur zu 17 Gew.-% ein 0,063 mm Sieb passiert. Die Schüttdichte betrug 0,43 kg/Liter.

## Patentansprüche

1. Verfahren zur Herstellung von feinteiligen Polysaccharidderivaten, **dadurch gekennzeichnet, dass**
a) ein Polysaccharidderivat in einer ausreichenden Menge Wasser, bevorzugt 35 bis 99 Gew.-%, besonders bevorzugt 60 bis 80 Gew.-% bezogen auf das Gesamtgewicht, gequollen oder gelöst wird, so dass übergeordnete Strukturen, wie sie aus dem Polysaccharidausgangsmaterial resultieren weitgehend aufgehoben werden, und anschließend
b) in einer Mahltrocknungsvorrichtung derart mittels Heißdampfmahltrocknung mit einem Wärmeträgergas bestehend aus überhitztem Wasserdampf in den Festkörperzustand überführt wird, dass synergistisch einerseits durch überhitzten Wasserdampf das Wasser, das sich im gequollenen oder gelösten Polysaccharidderivat befindet, in die Dampfphase überführt wird und andererseits das gelöste oder gequollene Polysaccharidderivat durch Phasenübergang in den Festkörper überführt wird, wobei bei diesen Prozessen die Formveränderung des Polysaccharidderivates zu pulverförmigen Feststoffpertikeln gewünschter Partikelgröße und Eigenschaften unter Überlagerung von äußeren Kräften geschieht (Helßdampfmahltrocknung, HDMT), und dann
c) gegebenenfalls in einem anschließenden Trocknungsschritt in Aggregaten gemäß dem Stand der Technik auf die gewünschte Feuchte getrocknet wird.

2. Verfahren nach Anspruch 1, **dadurch gekennzeichnet, dass** die für eine Modifizierung des Eigenschaftsproflles des Endproduktes notwendigen Modifikatoren, Additive und/oder Wirkstoffe dem Polysaccharidderivat vor, während oder nach einem oder mehreren der Teilschritte des Verfahrens nach Anspruch 1 eingemischt oderzugegeben werden.

3. Verfahren nach einem der Ansprüche 1 bis 2, **dadurch gekennzeichnet, dass** es sich bei dem Polysaccharidderivat um ein Polysaccharidderivat mit einem thermischen Flockpunkt handelt, und die übergeordneten Strukturen dieses Polysaccharidderivates, wie sie aus dem Polysaccharidausgangsmaterial resultieren, durch Abkühlung eines lösungsmittelfeuchten Filterkuchens, gegebenenfalls unter Zuhilfenahme zusätzlichen Wassers, bis auf Temperaturen unterhalb des Flockpunktes, weitgehend aufgehoben werden.

4. Verfahren nach einem der Ansprüche 1 bis 3, **dadurch gekennzeichnet, dass** es sich bei dem Polysaccharidderivat um ein Cellulosederivat handelt.

5. Verfahren nach einem der Ansprüche 1 bis 4, **dadurch gekennzeichnet, dass** es sich bei dem Cellulosederivat um einen Celluloseether, Celluloseester oder Celluloseetherester handelt

6. Verfahren nach einem der Ansprüche 1 bis 5, **dadurch gekennzeichnet, dass** es sich bei dem Celluloseether um Methylcellulose, Methylhydroxyethylcellulose, Methylhydroxypropylcellulose oder Hydroxypropylcellulose handelt.

7. Verfahren nach einem der Ansprüche 1 bis 6, **dadurch gekennzeichnet, dass** man die Helßdampfmahltrocknung in einer Luft bzw. Gasstrommühle durchführt, in der das Produkt zusätzlich einer Prall- und Scherbeanspruchung unterworfen wird.

8. Verfahren nach Anspruch 7, **dadurch gekennzeichnet, dass** die Prall- und Scherbeanspruchung durch eine Hammermühle, Slebmühle, Stiftmühle, Scheibenmühle oder Strahlmühle, vorzugsweise Sichtermühle, erfolgt.

9. Verfahren nach einem der Ansprüche 7 bis 8, **dadurch gekennzeichnet, dass** in der Prall- und Scherbeanspruchungavorrichtung das durch Helßdempfmehltrocknung erzeugte Produkt einer Sichtung unterworfen wird und die Griesse dem Aufgabegut untergemischt und/oder zur Mahlzone zurückgeführt und/oder Fertigprodukten mit gröberen Körnungen zugemischt werden.

10. Verfahren nach einem der Ansprüche 1 bis 9, **dadurch gekennzeichnet, dass** das Polysaccharidderivatprodukt einer Klaasierung durch Siebung und/oder Sichtung unterworfen wird.

11. Verfahren nach einem der Ansprüche 1 bis 10, **dadurch gekennzeichnet dass** die so erhaltenen felnteiligen Polysacchariderivatprodukte einen Formfaktor von kleiner 6 und größer/gleich 1 aufweisen, bevorzugt einen überwiegenden Anteil (> 50 Gaw.-%) an Partikeln mit einem Formfaktor von kleiner 2 besitzen.

12. Verfahren nach einem der Ansprüche 1 bis 11, **dadurch gekennzeichnet, dass** die Prozessführung der Helßdampfinahltrockung, gegebenenfalls mit dem nechgeschalteten Trockner, so erfolgt, dass eine Kondensation des Wasserdampfes verhindert wird, um ein Anlösen der gewonnen felnteiligen Polysaccharidderivatfeststoffe zu verhindern.

## Claims

1. Process for preparing finely divided polysaccharide derivatives, **characterised in that**
a) polysaccharide derivative is soaked or dissolved in an adequate quantity of water, preferably 35 to 99 wt.%, particularly preferably 60 to 80 wt.%, based on the total weight, so that primary structures which result from the polysaccharide starting material are largely removed, and subsequently
b) is converted into the solid state in a dryerpulveriser in such a way by means of steam mill drying with a heat-transfer gas consisting of superheated steam that, synergistically, on the one hand the water contained in the soaked or dissolved polysaccharide derivative is converted into the vapour phase by superheated steam and on the other hand, the dissolved or soaked polysaccharide derivative is converted into the solid by phase transition, the change in the form of the polysaccharide derivative to pulverulent solid particles having the required particle size and properties taking place in these processes under the superimposition of external forces (steam mill drying), and then
c) optionally, in a subsequent drying step, is dried to the required moisture content in prior art units.

2. Process according to claim 1, **characterised in that** the modifiers, additives and/or active ingredients required to modify the properties of the end product are incorporated with or added to the polysaccharide derivative before, during or after one or more of the partial steps in the process according to claim 1.

3. Process according to one of claims 1 and 2, **characterised in that** the polysaccharide derivative is a polysaccharide derivative having a thermal flocculation point, and the primary structures of this polysaccharide derivatives which result from the polysaccharide starting material are largely removed by cooling a solvent-moistened filter cake, optionally with the aid of additional water, to temperatures below the flocculation point.

4. Process according to one of claims 1 to 3, **characterised in that** the polysaccaride derivative is a cellulose derivative.

5. Process according to one of claims 1 to 4, **characterised in that** the cellulose derivative is a cellulose ether, cellulose ester or cellulose ether ester.

6. Process according to one of claims 1 to 5, **characterised in that** the cellulose ether is methyl cellulose, methyl hydroxyethyl cellulose, methyl hydroxylpropyl cellulose or hydroxypropyl cellulose.

7. Process according to one of claims 1 to 6, **characterised in that** the steam mill drying is carried out in an air- or gas-swept mill, wherein the product is additionally subjected to an impacting and shearing stress.

8. Process according to claim 7, **characterised in that** the impacting and shearing stress is applied by means of a hammer mill, screen-type mill, pin mill, disk mill or jet mill, preferably a classifier mill.

9. Process according to one of claims 7 and 8, **characterised in that,** in the device for applying the impacting and shearing stress, the product obtained by steam mill drying is subjected to an air classification and the grit is mixed with the feed material and/or returned to the pulverising zone and/or added to finished products having coarser grain sizes.

10. Process according to one of claims 1 to 9, **characterised in that** the polysaccharide derivative product is optionally subjected to a classification by screening and/or by air.

11. Process according to one of claims 1 to 10, **characterised in that** the finely divided polysaccharide derivative products thus obtained have a shape factor of less than 5 and greater than/equal to 1 and preferably a majority ( > 50 wt.%) of particles has a shape factor of less than 2.

12. Process according to one of claims 1 to 11, **characterised in that** the procedure for the steam mill drying, optionally with the dryer arranged in tandem, is carried out in such a way that a condensation of the steam is prevented, in order to prevent a partial solution of the solid finely divided polysaccharide derivative obtained.

## Revendications

1. Procédé pour la préparation de dérivés de polysaccharides en fines particules, **caractérisé en ce que**
a) on gonfle ou on dissout un dérivé de polysaccharide dans une quantité d'eau suffisante, de préférence 35 à 99 %, plus spécialement 60 à 80 % du poids total, en sorte qu les structures d'ordre supérieur, transmises du polysaccharide de départ, soient pratiquement supprimées, puis
b) on le fait passer à l'état de corps solide dans une installation de broyage-séchage par séchage et broyage à la vapeur à l'aide d'un gaz de transfert thermique constitué de vapeur d'eau surchauffée.
c) dans laquelle, dans des opérations synergiques, d'une part de la vapeur d'eau que se trouve dans le dérivé de polysaccharide gonflé ou dissous et d'autre part, le dérivé de polysaccharide dissous ou gonflé passe par transfert de phase à l'état de corps solide, la modification de forme du dérivé de polysaccharide, passant à l'état de particules solides pulvérulentes aux dimensions et aux propriétés voulues dans des opérations, ayant lieu sous l'action de forces extérieures (broyage-séchage à la vapeur surchauffée, BSVS) puis
d) le cas échéant, on porte au taux d'humidité voulu dans une opération subséquente de séchage réalisée dans des appareils de la technique antérieure.

2. Procédé selon la revendication 1, **caractérisé en ce qu'**avant, durant ou après un ou plusieurs des stades opératoires du procédé de la revendication 1, et en vue de modifier l'ensemble de propriétés du produit final, on ajoute ou on mélange les agents modifiants, additifs et/ou substances actives nécessaires au dérivé de polysaccharide.

3. Procédé selon l'une des revendications 1 à 2, **caractérisé en ce que** le dérivé de polysaccharide est un dérivé de polysaccharide ayant un point de floculation à la chaleur et les structures d'ordre supérieur de ce dérivé de polysaccharide, transmises par le polysaccharide de départ, sont pratiquement supprimées par refroidissement d'un gâteau de filtration humide de solvant, le cas échéant avec adjonction de complément d'eau, à des températures inférieures au point de floculation.

4. Procédé selon l'une des revendications 1 à 3, **caractérisé en ce que** le dérivé de polysaccharide est un dérivé de la cellulose.

5. Procédé selon l'une des revendications 1 à 4, **caractérisé en ce que** le dérivé de la cellulose est un éther cellulosique, un ester cellulosique ou un éther-ester cellulosique.

6. Procédé selon l'une des revendications 1 à 5, **caractérisé en ce que** l'éther cellulosique consiste en méthylcellulose, méthylhydroxyéthylcellulose, méthylhydroxypropylcellulose ou hydroxypropylcellulose.

7. Procédé selon l'une des revendications 1 à 6, **caractérisé en ce que** le broyage-séchage à la vapeur surchauffée est réalisé dans un broyeur à jet d'air ou à jet de gaz dans lequel le produit est soumis en outre à des contraintes de chocs et de cisaillements.

8. Procédé selon la revendication 7, **caractérisé en ce que** les contraintes de chocs et de cisaillements sont apportées par un broyeur à marteaux, un broyeur à tamis, un broyeur à tiges, un broyeur à disques ou un broyeur à jet, de préférence un broyeur-tamiseur.

9. Procédé selon l'une des revendications 7 à 8, **caractérisé en ce que**, dans l'appareillage apportant les contraintes de chocs et de cisaillements, le produit formé par broyage-séchage à la vapeur surchauffée est soumis à un tamisage et les parties grossières sont mélangées au produit fini et/ou recyclées à la zone de broyage et/ou mélangées à des produits finis à plus forte granulométrie.

10. Procédé selon l'une des revendications 1 à 9, **caractérisé en ce que** le produit obtenu à partir du dérivé de polysaccharide est soumis à une classification granulométrique par sassage et/ou tamisage.

11. Procédé selon l'une des revendications 1 à 10, **caractérisé en ce que** le produit en fines particules obtenu à partir du dérivé de polysaccharide présente un facteur de forme inférieur et supérieur ou égal à 1, avec de préférence une proportion prépondérante (plus de 50 % en poids) des particules qui ont un facteur de forme inférieur à 2.

12. Procédé selon l'une des revendications 1 à 11, **caractérisé en ce que** le broyage-séchage à la vapeur surchauffée, éventuellement suivi d'un séchage, est réalisé dans des conditions telles que toute condensation de la vapeur est évitée, qui risquerait de provoquer un début de dissolution des fines particules solides du dérivé de polysaccharide.
